# EUROPÄISCHE PATENTSCHRIFT

(11) **EP 2 438 351 B1**
(45) Veröffentlichungstag und Bekanntmachung des Hinweises auf die Patenterteilung: **29.11.2017**
(21) Anmeldenummer: 10702686.6
(22) Anmeldetag: 05.02.2010
(51) Int. Cl.: F22B 1/18, F22B 29/06

(54) **DURCHLAUFVERDAMPFER**
CONTINUOUS EVAPORATOR
ÉVAPORATEUR CONTINU

(30) Priorität: 09.03.2009 DE 102009012322
(43) Veröffentlichungstag der Anmeldung: 11.04.2012
(73) Patentinhaber: Siemens Aktiengesellschaft, 80333 München (DE)
(72) Erfinder: BRÜCKNER, Jan, 91080 Uttenreuth (DE); FRANKE, Joachim, 90403 Nürnberg (DE); SCHLUND, Gerhard, 90425 Nürnberg (DE)
(86) Internationale Anmeldenummer: PCT/EP2010/051425
(87) Internationale Veröffentlichungsnummer: WO 2010/102865

(56) Entgegenhaltungen:
- WO-A1-92/18807
- DE-A1- 19 602 680
- DE-A1- 19 651 678
- DE-C1- 19 645 748
- US-B1- 6 957 630

## Beschreibung

Die Erfindung betrifft einen Durchlaufverdampfer für einen Abhitzedampferzeuger in liegender Bauweise mit einer ersten Verdampferheizfläche, die eine Anzahl von im Wesentlichen vertikal angeordneten, von unten nach oben durchströmten ersten Dampferzeugerrohren umfasst, und einer weiteren, der ersten Verdampferheizfläche strömungsmediumsseitig nachgeschalteten zweiten Verdampferheizfläche, die eine Anzahl von weiteren, im Wesentlichen vertikal angeordneten, von unten nach oben durchströmten zweiten Dampferzeugerrohren umfasst.

Bei einer Gas- und Dampfturbinenanlage wird die im entspannten Arbeitsmittel oder Heizgas aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem üblicherweise eine Anzahl von Heizflächen zur Wasservorwärmung, zur Dampferzeugung und zur Dampfüberhitzung angeordnet ist. Die Heizflächen sind in den Wasser-Dampf-Kreislauf der Dampfturbine geschaltet. Der Wasser-Dampf-Kreislauf umfasst üblicherweise mehrere, z. B. drei, Druckstufen, wobei jede Druckstufe eine Verdampferheizfläche aufweisen kann.

Für den der Gasturbine als Abhitzedampferzeuger heizgasseitig nachgeschalteten Dampferzeuger kommen mehrere alternative Auslegungskonzepte, nämlich die Auslegung als Durchlaufdampferzeuger oder die Auslegung als Umlaufdampferzeuger, in Betracht. Bei einem Durchlaufdampferzeuger führt die Beheizung von als Verdampferrohren vorgesehenen Dampferzeugerrohren zu einer Verdampfung des Strömungsmediums in den Dampferzeugerrohren in einem einmaligen Durchlauf. Im Gegensatz dazu wird bei einem Natur- oder Zwangumlaufdampferzeuger das im Umlauf geführte Wasser beim Durchlauf durch die Verdampferrohre nur teilweise verdampft. Das dabei nicht verdampfte Wasser wird nach einer Abtrennung des erzeugten Dampfes für eine weitere Verdampfung denselben Verdampferrohren erneut zugeführt.

Ein Durchlaufdampferzeuger unterliegt im Gegensatz zu einem Natur- oder Zwangumlaufdampferzeuger keiner Druckbegrenzung. Ein hoher Frischdampfdruck begünstigt einen hohen thermischen Wirkungsgrad und somit niedrige CO2-Emissionen eines fossilbeheizten Kraftwerks. Zudem weist ein Durchlaufdampferzeuger im Vergleich zu einem Umlaufdampferzeuger eine einfache Bauweise auf und ist somit mit besonders geringem Aufwand herstellbar. Die Verwendung eines nach dem Durchlaufprinzip ausgelegten Dampferzeugers als Abhitzedampferzeuger einer Gas- und Dampfturbinenanlage ist daher zur Erzielung eines hohen Gesamtwirkungsgrades der Gas- und Dampfturbinenanlage bei einfacher Bauweise besonders günstig.

Ein als Abhitzedampferzeuger ausgelegter Durchlaufdampferzeuger kann grundsätzlich in einer von zwei alternativen Bauformen ausgeführt sein, nämlich in stehender Bauweise oder in liegender Bauweise. Ein Durchlaufdampferzeuger in liegender Bauweise ist dabei für eine Durchströmung des beheizenden Mediums oder Heizgases, beispielsweise des Abgases aus der Gasturbine, in annähernd horizontaler Richtung ausgelegt, wohingegen ein Durchlaufdampferzeuger in stehender Bauweise für eine Durchströmung des beheizenden Mediums in einer annähernd vertikalen Richtung ausgelegt ist.

Ein Durchlaufdampferzeuger in liegender Bauweise, wie beispielsweise aus der DE 196 51 678 A1 und der US 6,957,630 B1 bekannt, ist im Gegensatz zu einem Durchlaufdampferzeuger in stehender Bauweise mit besonders einfachen Mitteln und mit besonders geringem Fertigungs- und Montageaufwand herstellbar. Bei einem Durchlaufdampferzeuger in liegender Bauweise sind die Dampferzeugerrohre einer Verdampferheizfläche jedoch je nach ihrer Positionierung einer stark unterschiedlichen Beheizung ausgesetzt. Dabei kann insbesondere in den strömungsmediumsseitig vorgelagerten Dampferzeugerrohren eine instabile Strömung auftreten, die die Betriebssicherheit des Abhitzedampferzeugers gefährden kann. Zur dynamischen Stabilisierung wurden daher bisher beispielsweise Drosseln am Eintritt der Dampferzeugerrohre, eine Vergrößerung des Rohrdurchmessers vom Eintritt zum Austritt hin, oder der Einsatz von Druckausgleichsleitungen und -sammlern vorgeschlagen. Diese Maßnahmen können jedoch bei einem Abhitzedampferzeuger in liegender Bauweise entweder nicht wirksam oder technisch nicht umsetzbar sein.

Der Erfindung liegt daher die Aufgabe zugrunde, einen Abhitzedampferzeuger der oben genannten Art anzugeben, welcher bei besonders einfacher Bauweise eine besonders hohe betriebliche Sicherheit aufweist.

Diese Aufgabe wird erfindungsgemäß gelöst, indem der Innendurchmesser der ersten Dampferzeugerrohre derart gewählt ist, dass die sich im Volllastbetrieb einstellende mittlere Massenstromdichte in den ersten Dampferzeugerrohren eine vorgegebene Mindestmassenstromdichte nicht unterschreitet.

Die Erfindung geht dabei von der Überlegung aus, dass eine besonders hohe betriebliche Sicherheit durch eine dynamische Stabilisierung der Strömung in den ersten Dampferzeugerrohren erreicht werden könnte. Insbesondere sollte eine pulsierende, schwingungsartige Strömung vermieden werden. Dabei wurde erkannt, dass eine derartige Strömung insbesondere in denjenigen ersten Dampferzeugerrohren entsteht, die am heizgasseitigen Austritt der ersten Verdampferheizfläche positioniert sind und eine vergleichsweise geringe Beheizung erfahren. Diese Rohre enthalten ein Strömungsmedium mit vergleichsweise hohem Wasseranteil. Aufgrund des höheren Gewichtsanteils des Strömungsmediums dieser Rohre reduziert sich die Durchströmung dieser Rohre teilweise bis zur Stagnation. Zur Vermeidung dieses Effekts könnten Drosseln oder Druckausgleichsleitungen vorgesehen werden, die jedoch eine vergleichsweise aufwändigere Konstruktion bedeuten würden. Um also eine Stagnation der Strömung zu vermeiden und gleichzeitig eine besonders einfache Konstruktion des Abhitzedampferzeugers zu ermöglichen, sollten direkt die Parameter der Dampferzeugerrohre der ersten Verdampferheizfläche modifiziert werden. Dies ist erreichbar, indem die ersten Dampferzeugerrohre derart ausgelegt sind, dass die sich im Volllastbetrieb einstellende mittlere Massenstromdichte durch die ersten Dampferzeugerrohre eine vorgegebene Mindestmassenstromdichte nicht unterschreitet.

Vorteilhafterweise beträgt die vorgegebene Mindestmassenstromdichte dabei 100 kg/m²s. Eine Auslegung der Dampferzeugerrohre zur Erreichung einer derart gewählten Massenstromdichte führt nämlich zu einer besonders guten dynamischen Stabilisierung der Strömung in den ersten Dampferzeugerrohren und somit zu einem besonders sicheren Betrieb des Dampferzeugers.

Es wurde erkannt, dass die Stagnation der Strömung in den Rohren durch einen vergleichsweise hohen geodätischen Druckverlust in den Dampferzeugerrohren verursacht wird. Um die Massenstromdichte zu stabilisieren, sollte daher der Anteil des geodätischen Druckverlusts am Gesamtdruckverlust reduziert werden. Dies ist erreichbar, indem der Innendurchmesser der ersten Dampferzeugerrohre vorteilhafterweise derart gewählt ist, dass die sich im Volllastbetrieb einstellende mittlere Massenstromdichte in den ersten Dampferzeugerrohren die vorgegebene Mindestmassenstromdichte nicht unterschreitet, wodurch der Gesamtdruckverlust durch Erhöhung des Reibungsdruckverlustes vergrößert wird.

Vorteilhafterweise beträgt der Innendurchmesser der ersten Dampferzeugerrohre dabei zwischen 15 und 35 mm. Eine Wahl des Innendurchmessers in diesem Bereich bestimmt das Volumen der ersten Dampferzeugerrohre nämlich derart, dass der geodätische Druckverlust in den Dampferzeugerrohren so gering ist, dass die vorgegebene Mindestmassenstromdichte nicht unterschritten wird, d. h. keine Stagnation oder kein Pulsieren der Strömung mehr auftreten können. Somit wird ein besonders sicherer Betrieb des Abhitzedampferzeugers gewährleistet.

In vorteilhafter Ausgestaltung ist eine Anzahl von ersten Dampferzeugerrohren einander heizgasseitig als Rohrreihen hintereinander geschaltet. Dies ermöglicht es, eine größere Anzahl von parallel geschalteten Dampferzeugerrohren für eine Verdampferheizfläche zu verwenden, was durch die vergrößerte Oberfläche einen besseren Wärmeeintrag bedeutet. Allerdings sind die in Heizgasströmungsrichtung hintereinander angeordneten Dampferzeugerrohre dabei unterschiedlich beheizt. Insbesondere in den heizgasaustrittsseitigen Dampferzeugerrohren wird das Strömungsmedium vergleichsweise schwach beheizt. Durch die beschriebene Auslegung der Dampferzeugerrohre kann jedoch auch in diesen Dampferzeugerrohren eine Stagnation der Strömung vermieden werden. Durch diese dynamische Stabilisierung wird bei einfacher Konstruktion ein besonders sicherer Betrieb des Abhitzedampferzeugers erreicht.

In vorteilhafter Ausgestaltung ist die erste Verdampferheizfläche der zweiten Verdampferheizfläche heizgasseitig nachgeschaltet. Dies bietet den Vorteil, dass die zweite, strömungsmediumsseitig nachgeschaltete und somit zur weiteren Erhitzung bereits verdampften Strömungsmediums ausgelegte Verdampferheizfläche auch in einem vergleichsweise stärker beheizten Bereich des Heizgaskanals liegt.

Zweckmäßigerweise kommt ein derartiger Durchlaufverdampfer in einem Abhitzedampferzeuger zum Einsatz und es wird der Abhitzedampferzeuger in einer Gas- und Dampfturbinenanlage verwendet. Dabei ist der Dampferzeuger vorteilhafterweise heizgasseitig einer Gasturbine nachgeschaltet. Bei dieser Schaltung kann zweckmäßigerweise hinter der Gasturbine eine Zusatzfeuerung zur Erhöhung der Heizgastemperatur angeordnet sein.

Die mit der Erfindung erzielten Vorteile bestehen insbesondere darin, dass durch die Auslegung der ersten Dampferzeugerrohre derart, dass die sich im Volllastbetrieb einstellende mittlere Massenstromdichte in den ersten Dampferzeugerrohren eine vorgegebene Mindestmassenstromdichte nicht unterschreitet, eine dynamische Stabilisierung der Strömung und somit ein besonders sicherer Betrieb des Abhitzedampferzeugers erreicht wird. Durch eine entsprechende Auslegung der Dampferzeugerrohre wird dieser Effekt auch ohne weitere, aufwändige technische Maßnahmen erzielt und ermöglicht so gleichzeitig eine besonders einfach, kostensparende Konstruktion des Abhitzedampferzeugers bzw. eines Gas- und Dampfturbinenkraftwerks.

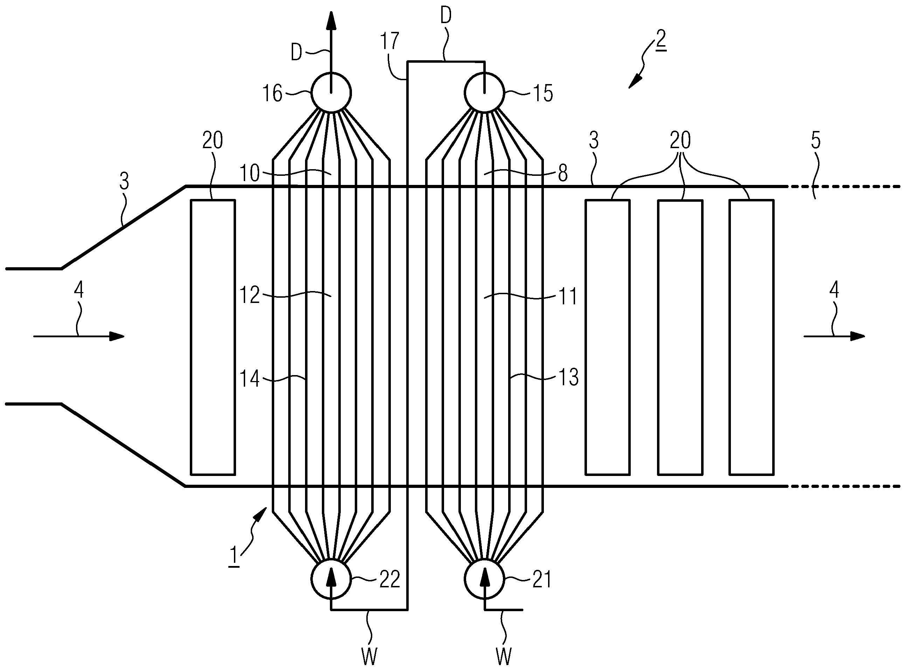

Ein Ausführungsbeispiel der Erfindung wird anhand einer Zeichnung näher erläutert. Darin zeigt die Figur in vereinfachter Darstellung im Längsschnitt einen Dampferzeuger in liegender Bauweise.

Der Durchlaufdampferzeuger 1 für den Abhitzedampferzeuger 2 gemäß der FIG ist einer nicht näher dargestellten Gasturbine abgasseitig nachgeschaltet. Der Abhitzedampferzeuger 2 weist eine Umfassungswand 3 auf, die einen in einer annähernd horizontalen, durch die Pfeile 4 angedeuteten Heizgasrichtung durchströmbaren Heizgaskanal 5 für das Abgas aus der Gasturbine bildet. Im Heizgaskanal 5 ist eine Anzahl von nach dem Durchlaufprinzip ausgelegten Verdampferheizflächen 8, 10 angeordnet. Im Ausführungsbeispiel gemäß der FIG sind jeweils zwei Verdampferheizflächen 8, 10 gezeigt, es kann aber auch eine größere Anzahl von Verdampferheizflächen vorgesehen sein.

Die Verdampferheizflächen 8, 10 gemäß der FIG umfassen jeweils in der Art eines Rohrbündels eine Anzahl von in Heizgasrichtung hintereinander angeordneten Rohrreihen 11 bzw. 12. Jede Rohrreihe 11, 12 wiederum umfasst jeweils eine Anzahl von in Heizgasrichtung nebeneinander angeordneten Dampferzeugerrohren 13 bzw. 14, von denen für jede Rohrreihe 11, 12 nur jeweils eines sichtbar ist. Die annähernd vertikal angeordneten, zur Durchströmung eines Strömungsmediums W parallel geschalteten ersten Dampferzeugerrohre 13 der ersten Verdampferheizfläche 8 sind dabei ausgangsseitig an einen ihnen gemeinsamen Austrittssammler 15 angeschlossen. Die ebenfalls annähernd vertikal angeordneten, zur Durchströmung eines Strömungsmediums W parallel geschalteten zweiten Dampferzeugerrohre 14 der zweiten Verdampferheizfläche 10 sind ebenso ausgangsseitig an einen ihnen gemeinsamen Austrittssammler 16 angeschlossen. Die Dampferzeugerrohre 14 der zweiten Verdampferheizfläche 10 sind den Dampferzeugerrohren 13 der ersten Verdampferheizfläche 8 strömungstechnisch über ein Fallrohrsystem 17 nachgeschaltet.

Das aus den Verdampferheizflächen 8, 10 gebildete Verdampfersystem ist mit dem Strömungsmedium W beaufschlagbar, das bei einmaligem Durchlauf durch das Verdampfersystem verdampft und nach dem Austritt aus der zweiten Verdampferheizfläche 10 als Dampf D abgeführt wird. Das aus den Verdampferheizflächen 8, 10 gebildete Verdampfersystem ist in den nicht näher dargestellten Wasser-Dampf-Kreislauf einer Dampfturbine geschaltet. Zusätzlich zu dem die Verdampferheizflächen 8, 10 umfassenden Verdampfersystem sind in den Wasser-Dampf-Kreislauf der Dampfturbine eine Anzahl weitere, in der FIG schematisch angedeutete Heizflächen 20 geschaltet. Bei den Heizflächen 20 kann es sich beispielsweise um Überhitzer, um Mitteldruckverdampfer, um Niederdruckverdampfer und/oder um Vorwärmer handeln.

Die ersten Dampferzeugerrohre 13 sind nun derart ausgelegt, dass eine für Volllast vorgegebene Mindestmassenstromdichte von 100 kg/m²s nicht unterschritten wird. Dabei beträgt ihr Innendurchmesser zwischen 15 mm und 35 mm. Dadurch wird eine Stagnation der Strömung in den ersten Dampferzeugerrohren 13 vermieden. Eine stehende Wassersäule mit Dampfblasenbildung und eine daraus resultierenden schwingungsartigen, pulsierenden Strömung wird verhindert. Dadurch wird die mechanische Belastung des Abhitzedampferzeugers 2 reduziert und es ist ein besonders sicherer Betrieb bei gleichzeitig einfacher Bauweise gewährleistet.

## Patentansprüche

1. Abhitzedampferzeuger (2) mit einem Durchlaufverdampfer in liegender Bauweise mit einer ersten Verdampferheizfläche (8), die eine Anzahl von im Wesentlichen vertikal angeordneten, von unten nach oben durchströmten ersten Dampferzeugerrohren (13) umfasst, und einer weiteren, der ersten Verdampferheizfläche (8) strömungsmediumsseitig nachgeschalteten zweiten Verdampferheizfläche (10), die eine Anzahl von weiteren, im Wesentlichen vertikal angeordneten, von unten nach oben durchströmten zweiten Dampferzeugerrohren (14) umfasst,
**dadurch gekennzeichnet, dass** der Innendurchmesser der ersten Dampferzeugerrohre (13) derart gewählt ist, dass die sich im Volllastbetrieb einstellende mittlere Massenstromdichte in den ersten Dampferzeugerrohre (13) die vorgegebene Mindestmassenstromdichte nicht unterschreitet..

2. Abhitzedampferzeuger (1) nach Anspruch 1, bei dem die vorgegebene Mindestmassenstromdichte 100 kg/m²s beträgt.

3. Abhitzedampferzeuger (1) nach einem der Ansprüche 1 bis 2, bei dem der Innendurchmesser der ersten Dampferzeugerrohre (13) zwischen 15 mm und 35 mm beträgt.

4. Abhitzedampferzeuger (1) nach einem der Ansprüche 1 bis 3, bei dem eine Anzahl von ersten Dampferzeugerrohren (13) einander heizgasseitig als Rohrreihen (11) hintereinander geschaltet sind.

5. Abhitzedampferzeuger (1) nach einem der Ansprüche 1 bis 4, bei dem die erste Verdampferheizfläche (8) der zweiten Verdampferheizfläche (10) heizgasseitig nachgeschaltet ist.

## Claims

1. Waste heat steam generator (2) with a horizontally constructed once-through evaporator with a first evaporator heating surface (8) which incorporates a number of first steam generation tubes (13), the arrangement of which is essentially vertical and through which the flow is from the bottom to the top, and another second evaporator heating surface (10), which on the flow substance side is connected downstream from the first evaporator heating surface (8), which incorporates a further number of second steam generation tubes (14) the arrangement of which is essentially vertical and through which the flow is from the bottom to the top,
**characterised in that** the internal diameter of the first steam generation tubes (13) is chosen such that the mean mass flow density which is established in the first steam generation tubes (13) when operating at full load does not fall below a prescribed minimum mass flow density.

2. Waste heat steam generator (1) according to claim 1, in which the value of the prescribed minimum mass flow density is 100 kg/m²s.

3. Waste heat steam generator (1) according to one of claims 1 to 2, in which the value of the internal diameter of the first steam generation tubes (13) is between 15 mm and 35 mm.

4. Waste heat steam generator (1) according to one of claims 1 to 3, in which a number of first steam generation tubes (13) are connected one after another on the heating gas side as rows of tubes (11).

5. Waste heat steam generator (1) according to one of claims 1 to 4, in which the first evaporator heating surface (8) is connected downstream on the heating gas side from the second evaporator heating surface (10).

## Revendications

1. Générateur (2) de vapeur à récupération de la chaleur perdue, comprenant un évaporateur à passage continu en mode de construction horizontal, ayant une première surface (8) de chauffe d'évaporateur, qui comprend un certain nombre de premiers tubes (13) de générateur de vapeur disposés sensiblement verticalement et parcourus de bas en haut, et une autre deuxième surface (10) de chauffe d'évaporateur montée en aval, du point de vue du fluide en écoulement, de la première surface (8) de chauffe d'évaporateur, qui comprend un certain nombre d'autres deuxièmes tubes (14) de générateur de vapeur disposés sensiblement verticalement et parcourus de bas en haut,
**caractérisé en ce que** le diamètre intérieur des premiers tubes (13) du générateur de vapeur est choisi, de manière à ce que la densité de courant massique moyenne, s'établissant en fonctionnement en pleine charge dans les premiers tubes (13) du générateur de vapeur, ne dépasse pas la densité du courant massique minimum donnée à l'avance.

2. Générateur (1) de vapeur à récupération de la chaleur perdue suivant la revendication 1, dans lequel la densité de courant massique minimum donnée à l'avance est de 100 kg/m²s.

3. Générateur (1) de vapeur à récupération de la chaleur perdue suivant l'une des revendications 1 à 2, dans lequel le diamètre inférieur des premiers tubes (13) du générateur de vapeur est compris entre 15 mm et 35 mm.

4. Générateur (1) de vapeur à récupération de la chaleur perdue suivant l'une des revendications 1 à 3, dans lequel un certain nombre de premiers tubes (13) du générateur de vapeur sont montés les uns derrière les autres considéré du point de vue du gaz chaud sous la forme de rangées (11) de tubes.

5. Générateur (1) de vapeur à récupération de la chaleur perdue suivant l'une des revendications 1 à 4, dans lequel la première surface (8) de chauffe de l'évaporateur est montée en aval, considéré du point de vue du gaz chaud, de la deuxième surface (10) de chauffe de l'évaporateur.
